Europäisches Patentamt

European Patent Office

Office européen des brevets

(19)

(11) Numéro de publication: **0 149 928**

**A1**

(12) # DEMANDE DE BREVET EUROPEEN

(21) Numéro de dépôt: 84400154.5

(22) Date de dépôt: 24.01.84

(51) Int. Cl.⁴: **G 05 B 11/42**
**G 05 D 23/24**

(43) Date de publication de la demande:
31.07.85 Bulletin 85/31

(84) Etats contractants désignés:
DE GB NL

(71) Demandeur: **COMPAGNIE D'ELECTRONIQUE ET DE PIEZO-ELECTRICITE - C.E.P.E.**
**44, rue de la Glacière**
**F-95100 Argenteuil(FR)**

(72) Inventeur: **Chauvin, Jacques**
**THOMSON-CSF SCPI 173, bld Haussmann**
**F-75379 Paris Cedex 08(FR)**

(72) Inventeur: **Canzian, Patrice**
**THOMSON-CSF SCPI 173, bld Haussmann**
**F-75379 Paris Cedex 08(FR)**

(74) Mandataire: **Ruellan-Lemonnier, Brigitte et al,**
**THOMSON-CSF SCPI 173, boulevard Haussmann**
**F-75379 Paris Cedex 08(FR)**

(54) **Dispositif de régulation du type P.I.D. délivrant une tension de sortie de polarité donnée.**

(57) L'invention concerne un dispositif de régulation du type P.I.D. délivrant une tension de sortie de polarité donnée, notamment en vue de la régulation en température d'une enceinte chauffée. Il comporte un dispositif de mesure ($R_1$, CTN) délivrant une tension de mesure ($V_{th}$) suivant une fonction décroissante de la grandeur à mesurer et un générateur de consigne délivrant une tension de référence ($V_{ref}$). Quatre amplificateurs opérationnels ($A_1$ à $A_4$) alimentés sous une tension de ladite polarité assurent la régulation ($A_1$ à $A_3$ montés en parallèle) et un quatrième ($A_4$) reçoit à son entrée non inverseuse la tension de mesure ($V_{th}$) et à son entrée inverseuse les sorties (12, 10, 8) des trois premiers amplificateurs ($A_1$ à $A_3$) en vue de leur sommation.

EP 0 149 928 A1

./...

0149928

# DISPOSITIF DE REGULATION DU TYPE P.I.D. DELIVRANT UNE TENSION DE SORTIE DE POLARITE DONNEE

La présente invention a pour objet un dispositif de régulation du type P.I.D. délivrant une sortie de polarité donnée, notamment une régulation de température pour une enceinte chauffée.

Les régulateurs du type P.I.D., c'est-à-dire à actions proportionnelle, intégrale et dérivée, sont bien connus dans les techniques de régulation. De tels régulateurs mettent en général en oeuvre des amplificateurs opérationnels symétriques alimentés sous deux tensions, positive et négative. Le calcul de tels éléments est simplifié dans la mesure où la tension de sortie est égale à la différence entre les tensions d'entrée multipliée par le gain de l'amplificateur, éventuellement variable avec la fréquence, notamment pour les corrections du type intégral ou dérivé.

Certains types de régulation, et notamment les régulations de température, n'ont besoin de délivrer en sortie qu'une tension de polarité donnée, à savoir dans l'exemple ci-dessus une tension de commande de chauffage. Il est alors économique d'essayer d'utiliser des amplificateurs opérationnels à une seule tension d'alimentation de manière à abaisser le prix de revient du régulateur. De tels amplificateurs ont cependant pour inconvénient de laisser subsister en sortie des tensions continues résiduelles susceptibles de saturer les circuits existants en aval.

La présente invention a ainsi pour objet un dispositif de régulation du type P.I.D. mettant en oeuvre des amplificateurs opérationnels alimentés sous une seule tension de polarité donnée et dont le montage est réalisé de manière à supprimer les tensions résiduelles néfastes au bon fonctionnement du régulateur, tout en ménageant par ailleurs un réglage amélioré des corrections apportées par le régulateur, grâce au découplage des fonctions de corrections proportionnelles intégrale et dérivée, réalisées dans des amplificateurs opérationnels montés en parallèle.

L'invention concerne donc un dispositif de régulation à actions proportionnelle, intégrale et dérivée pour la régulation d'un paramètre par délivrance en sortie d'un signal de commande électrique de polarité donnée, et il est caractérisé en ce qu'il comporte :

- un dispositif de mesure délivrant une tension de mesure suivant une fonction décroissante de la grandeur à mesurer;

- un générateur de consigne délivrant une tension de référence;

- quatre amplificateurs opérationnels alimentés sous une seule tension de ladite polarité donnée et dont les trois premiers sont montés en parallèle et reçoivent chacun à leur entrée non inverseuse directe la tension de référence et à leur entrée inverseuse la tension de mesure et consistant le premier en un amplificateur à action proportionnelle, le second en un amplificateur à action intégrale et le troisième en un amplificateur à action dérivée, et dont le quatrième reçoit à son entrée non inverseuse directe la tension de mesure et à son entrée inverseuse les sorties des trois premiers amplificateurs.

Le dispositif peut comporter un amplificateur de puissance recevant la tension de sortie du quatrième amplificateur opérationnel.

Ledit paramètre peut être une température et le dispositif de mesure être alors constitué par un pont diviseur alimenté en tension et dans lequel est disposé au moins un élément thermo-sensible. Ce dernier peut être du type à coefficient de température négatif et être raccordé entre la masse et le point où est disponible la tension de mesure, et le pont diviseur comporte alors une résistance électrique entre ledit point et l'alimentation en tension du pont diviseur.

Le dispositif peut comporter un cinquième amplificateur opérationnel monté en suiveur et recevant la tension de mesure à son entrée non inverseuse et dont la sortie est raccordée de manière à alimenter au moins un des quatre premiers amplificateurs opérationnels par la tension de mesure.

3

Le gain de l'ensemble peut être tel que l'application de la tension de mesure seule à l'entrée non inverseuse du quatrième amplificateur opérationnel, c'est-à-dire en faisant abstraction des corrections introduites par le P.I.D., produit une pré-commande d'un dispositif à réguler à une valeur voisine de celle désirée, mais au plus égale à celle-ci.

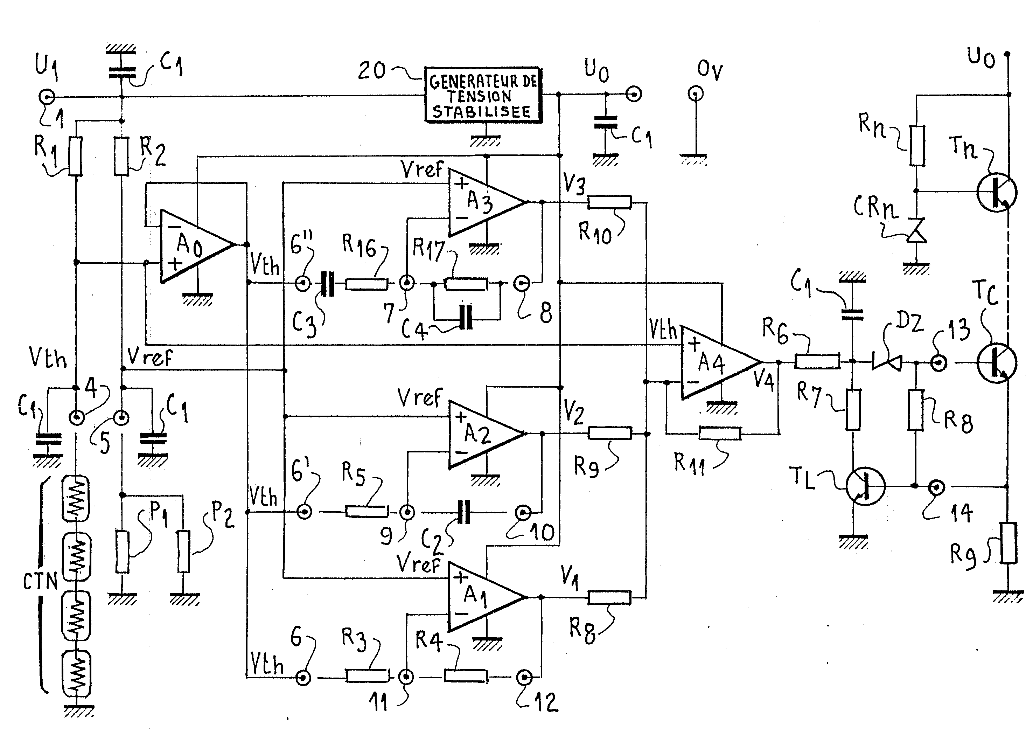

L'invention sera mieux comprise à la lecture de la description qui va suivre, donnée à titre d'exemple non limitatif en se reportant au dessin annexé qui représente un schéma électrique d'un mode de réalisation d'un dispositif selon l'invention.

Sur la figure unique, une tension d'alimentation positive $U_0$ (par exemple + 12 V) est utilisée pour alimenter cinq amplificateurs opérationnels $A_0$ à $A_4$ et un générateur de tension stabilisée 20 délivrant en sortie une tension $U_1$ (par exemple + 8 V) stabilisée avec précision. La tension $U_1$ est destinée à l'alimentation d'un premier pont diviseur comportant une résistance $R_1$ dont une première extrémité est mise à la tension $U_1$ et dont le pont milieu auquel est présente une tension de mesure $V_{th}$, est relié à des thermistances à coefficient de température négatif CTN, l'extrémité opposée des thermistances étant mise à la masse. La tension de mesure $V_{th}$ est ainsi une fonction décroissante de la température.

Pour plus de détail concernant ce mode de régulation à pluralité de thermistances, on se reportera à la demande de brevet européen déposée par la Demanderesse et publiée sous le N° 4 233. Elle est intitulée "DISPOSITIF DE REGULATION THERMIQUE D'UNE ENCEINTE, NOTAMMENT POUR CRISTAL PIEZO-ELECTRIQUE OSCILLANT, ET ENCEINTE COMPORTANT UN TEL DISPOSITIF".

Il va de soi qu'une régulation de température peut être effectuée classiquement à partir d'un nombre de thermistances quelconque supérieur ou égal à un.

La tension $U_1$ délivrée par le générateur de tension stabilisée 20 alimente également un deuxième pont diviseur ($R_2$, $P_1$, $P_2$) constitué par une résistance fixe $R_2$ montée en série avec deux

résistances en parallèle ($P_1$, $P_2$), de manière à obtenir, avec des valeurs de résistances normalisées, une valeur précise d'une tension référence $V_{ref}$ présente à la borne commune à la résistance $R_2$ et aux résistances $P_1$ et $P_2$. En variantes, ces deux résistances $P_1$ et $P_2$ peuvent être remplacées par un potentiomètre si on veut régler ou modifier la tension de référence $V_{ref}$. L'autre borne de la résistance $R_2$ est reliée à la tension stabilisée $U_1$ et les autres bornes des résistances $P_1$ et $P_2$ sont reliées à la masse. La tension $V_{th}$ est introduite à l'entrée non inverseuse directe d'un amplificateur opérationnel $A_0$ dont l'entrée inverseuse est bouclée sur elle-même de manière à produire un fonctionnement en suiveur de tension. Ceci permet d'alimenter par la tension $V_{th}$ au point 6 des entrées à basse impédance comme les entrées inverseuses des circuits de correction P.I.D. comme nous allons le décrire maintenant.

La tension de référence $V_{ref}$ est introduite à l'entrée non inverseuse directe de trois amplificateurs opérationnels $A_1$, $A_2$ et $A_3$ destinés respectivement aux corrections proportionnelle, intégrale et dérivée.

L'amplificateur $A_1$ à action proportionnelle présente à son entrée inverseuse une résistance $R_3$ série disposée entre les bornes 6 et 11 et une résistance de contre-réaction $R_4$ disposée entre la borne de sortie 12 de l'amplificateur opérationnel $A_1$ et la borne 11. On définira la borne 11 comme la borne d'entrée inverseuse directe, et la borne 6, comme la borne d'entrée inverseuse de l'amplificateur opérationnel $A_1$.

L'amplificateur $A_2$ à action intégrale présente à son entrée inverseuse constituée par la borne 6' en contact électrique avec la borne 6 une résistance série $R_5$ disposée entre les bornes 6' et 9 et une capacité d'intégration $C_2$ disposée entre la borne de sortie 10 de l'amplificateur opérationnel $A_2$ et la borne 9. Comme dans le cas précédent, on définira la borne 9 comme la borne d'entrée inverseuse directe, et la borne 6' comme la borne d'entrée inverseuse de l'amplificateur opérationnel $A_2$.

5

L'amplificateur $A_3$ à action dérivée présente à son entrée inverseuse constituée par la borne 6' en contact électrique avec les bornes 6 et 6' une capacité de dérivation $C_3$ en série avec une résistance $R_{16}$ qui sert à limiter le gain à haute fréquence. Une résistance $R_{17}$ en contre-réaction entre la borne de sortie 10 de l'amplificateur et la borne d'entrée inverseuse directe de celui-ci repérée en 7 définit, conjointement avec la capacité $C_3$ la constante de temps de dérivation jusqu'à la fréquence où la constante de temps $R_{16}\,C_3$ ne laisse subsister qu'une action proportionnelle. En outre, une capacité $C_4$ en parallèle sur la résistance $R_{17}$ donne à l'amplificateur bouclé $A_3$ un gain décroissant vers les fréquences élevées.

On choisira classiquement pour cette fonction $R_{17}\,C_4 \lll R_{16}\,C_3$.

L'amplificateur $A_4$ va avoir pour fonction de réaliser la sommation des tensions présentes en sortie des amplificateurs $A_1$, $A_2$ et $A_3$ de manière à produire un signal de commande.

Si on désigne par $f_1\,(p)$, $f_2\,(p)$ et $f_3\,(p)$ les fonctions de transfert des amplificateurs bouclés $A_1$, $A_2$ et $A_3$, on aura, étant donné que les amplificateurs $A_1$, $A_2$ et $A_3$ sont du type alimenté sous une seule tension :

en sortie de $A_1$ au point 12 :

$$V_1 = V_{ref} + f_1\,(p)\,(V_{ref} - V_{th})$$

en sortie de $A_2$ au point 10 :

$$V_2 = V_{ref} + f_2\,(p)\,(V_{ref} - V_{th})$$

et en sortie de $A_3$ au point 8 :

$$V_3 = V_{ref} + f_3\,(p)\,(V_{ref} - V_{th})$$

La sommation de ces tensions donnera :

$$V = V_1 + V_2 + V_3 = 3V_{ref} + (V_{ref} - V_{th})\,F\,(p)$$

avec $F\,(p) = f_1\,(p) + f_2\,(p) + f_3\,(p)$ = correction apportée par le régulateur.

6

Le terme $3V_{ref}$ qui apparaît lors de la sommation est gênant car il représente une composante continue importante susceptible de saturer tout étage ultérieur.

Selon l'invention, on introduit un amplificateur $A_4$ destiné à réaliser la sommation en même temps que la compensation.

En choisissant un amplificateur $A_4$ de gain g et en introduisant les valeurs $V_1$, $V_2$ et $V_3$ à sommer à trois bornes inverseuses de celui-ci, c'est-à-dire en les reliant à l'entrée inverseuse directe de l'amplificateur opérationnel respectivement par trois résistances $R_8$, $R_9$ et $R_{10}$ de même valeur, l'amplificateur $A_4$ étant lui-même contre-réactionné par une résistance $R_{11}$, et en introduisant la tension $V_{th}$ à la borne non inverseuse directe de l'amplificateur $A_4$, il vient en sortie de ce dernier :

$$V_4 = V_{th} + g\left[(V_{th} - V_3) + (V_{th} - V_2) + (V_{th} - V_1)\right]$$

soit :

$$V_4 = (g + 3) V_{th} - g V = (g + 3) V_{th} - 3 g V_{ref} + g (V_{th} - V_{ref}) F (p)$$

c'est-à-dire :

$$V_4 = V_{th} + g (V_{th} - V_{ref}) (F (p) + 3)$$

soit avec g = 1 qui est la valeur la plus appropriée en pratique :

$$V_4 = V_{th} + (V_{th} - V_{ref}) (F (p) + 3)$$

On obtient ainsi un terme de régulation avec la fonction de transfert F (p) + 3, c'est-à-dire qu'au facteur g près, on a ajouté 3 au gain proportionnel intrinsèque du P.I.D., et un terme $V_{th}$ proportionnel à la tension disponible au borne des CTN. Cette tension décroît avec la température et elle peut être utilisée comme tension de préchauffage pour une enceinte à chauffer en choisissant correctement les gains des amplificateurs et le pont diviseur de mesure, pour une température de chauffage de consigne donnée, de manière que le préchauffage, mis à part l'action propre de la régulation, mette l'enceinte et la maintienne à une température voisine mais bien entendu au plus égale à celle désirée.

7

Le dispositif de régulation décrit ci-dessus présente donc cumulativement les avantages de fournir un régulateur économique puisque réalisé à partir d'une seule tension de polarité donnée, de découpler les fonctions proportionnelle, intégrale et dérivée et par conséquent de simplifier les réglages, et de fournir enfin une tension de préchauffage évoluant de manière inversement proportionnelle avec la température mesurée de l'enceinte à réguler, et qui apporte donc sa contribution propre au fonctionnement du régulateur.

La tension de sortie $V_4$ est appliquée à un amplificateur de puissance commandant le chauffage. L'amplificateur de puissance représenté est conforme à celui décrit dans la demande de brevet européen publiée sous le N° 4 233 et déposée par la Demanderesse avec le titre suivant "DISPOSITIF DE REGULATION THERMIQUE D'UNE ENCEINTE, NOTAMMENT POUR CRISTAL PIEZO-ELEC-TRIQUE OSCILLANT, ET ENCEINTE COMPORTANT UN TEL DISPOSITIF".

Ce montage permet de faire passer la même puissance dans les transistors $T_1$ à $T_n$ (avec $n \geqslant 1$) et de réaliser un chauffage homogène.

Sur la figure, on a également représenté de manière classique, des capacités de découplage $C_1$ de faible valeur qui peuvent éventuellement être mises en oeuvre.

L'invention ne se limite pas aux modes de réalisation décrits. Ainsi, on peut utiliser des thermistances à coefficient de température positif en les montant dans le pont diviseur à la place de la résistance $R_1$ et en substituant éventuellement aux CTN une résistance fixe. On comprendra par ailleurs que les paramètres de réglage des actions proportionnelle, intégrale et dérivée du régulateur sera fait de la manière bien connue de l'homme de l'art. On a représenté sur le dessin annexé des composants à valeur fixe arrêtée pour une régulation donnée après mise au point. Il va de soi qu'un dispositif selon l'invention peut être équipé d'éléments variables (résistances et/ou capacités) propres à permettre le réglage des 3 actions du régulateur d'une manière bien connue de l'homme de l'art.

D'autre part, la description ci-dessus a été donnée dans le cas de circuits alimentés sous une tension positive. Le schéma est identique dans le cas d'une alimentation sous tension négative, à ceci près, bien entendu, que le générateur 20 délivre une tension stabilisée négative et que dans l'amplificateur de puissance, le brochage des diodes Zener est inversé et que les transistors npn sont remplacés par des pnp.

9

REVENDICATIONS

1. Dispositif de régulation à actions proportionnelle, intégrale et dérivée pour la régulation d'un paramètre par délivrance en sortie d'un signal de commande électrique de polarité donnée, caractérisé en ce qu'il comporte :

- un dispositif de mesure ($R_1$, CTN) délivrant une tension de mesure ($V_{th}$) suivant une fonction décroissante de la grandeur à mesurer;

- un générateur de consigne délivrant une tension de référence ($V_{ref}$);

- quatre amplificateurs opérationnels ($A_1$ à $A_4$) alimentés sous une seule tension de ladite polarité donnée et dont les trois premiers ($A_1$ à $A_3$) sont montés en parallèle et reçoivent chacun par leur entrée non inverseuse directe la tension de référence et à leur entrée inverseuse la tension de mesure et consistant le premier en un amplificateur ($A_1$) à action proportionnelle, le second en un amplificateur ($A_2$) à action intégrale et le troisième en un amplificateur ($A_3$) à action dérivée, et dont le quatrième ($A_4$) reçoit par son entrée non inverseuse directe la tension de mesure ($V_{th}$ et à son entrée inverseuse les sorties des trois premiers amplificateurs.

2. Dispositif selon la revendication 1, caractérisé en ce que le quatrième amplificateur opérationnel ($A_4$) a un gain égal à l'unité.

3. Dispositif selon l'une des revendications 1 ou 2, caractérisé en ce qu'il comporte un amplificateur de puissance ($T_1$, $T_c$, $T_n$) recevant la tension de sortie du quatrième amplificateur opérationnel ($A_4$).

4. Dispositif selon l'une des revendications 1 à 3, caractérisé en ce que ledit paramètre est une température, en ce que le dispositif de mesure est constitué par un pont diviseur ($R_1$, CTN) alimenté en tension ($U_1$) dans lequel est disposé au moins un élément thermo-sensible (CTN).

10

5. Dispositif selon la revendication 4, caractérisé en ce que l'élément thermo-sensible est du type à coefficient de température négatif (CTN) et est raccordé entre la masse et le point (4) où est disponible la tension de mesure ($V_{th}$) et en ce qu'il comporte une résistance électrique ($R_1$) entre ledit point et l'alimentation en tension ($U_1$) du pont diviseur.

6. Dispositif selon une des revendications 4 ou 5, caractérisé en ce que ladite température est celle d'une enceinte thermostatée d'un oscillateur à quartz.

7.Dispositif selon l'une des revendications précédentes, caractérisé en ce qu'il comporte un cinquième amplificateur opérationnel ($A_0$) monté en suiveur et recevant la tension de mesure à son entrée non inverseuse directe et dont la sortie est raccordée de manière à alimenter au moins un des quatre premiers amplificateurs opérationnels ($A_1$ à $A_4$) par la tension de mesure ($V_{th}$).

8. Dispositif selon l'une des revendications précédentes, caractérisé en ce que le gain de l'ensemble est tel que l'application de la tension de mesure ($V_{th}$) seule à l'entrée non inverseuse directe du quatrième amplificateur opérationnel ($A_4$) produit une pré-commande d'un dispositif à réguler à une valeur voisine de celle désirée, mais au plus égale à celle-ci.

0149928

1/1

## RAPPORT DE RECHERCHE EUROPEENNE

Office européen
des brevets

EP 84 40 0154

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| E | FR-A-2 536 553 (C.E.P.E.) <br> * en entier * | 1-8 | G 05 B 11/42 <br> G 05 D 23/24 |
| A | ELECTRONIQUE & APPLICATIONS INDUSTRIELLES, no. 262S, janvier 1979, page 55, Paris, FR; J.-L. MACKENTHUN: "Amplificateur d'asservissement" <br> * en entier * | 1,2,7 | |
| A | DE-A-2 508 434 (E. DITTMAR) <br> * figure 3 * | 1,6 | |
| D,A | EP-A-0 004 233 (C.E.P.E.) <br><br> * figure 3 * | 1,3,4,5 | |
| A | TOUTE L'ELECTRONIQUE, no. 416, décembre 1976, page 78, Paris, FR; "Circuits régulateurs de température et de luminosité" <br> * en entier * | 1,4,5 | DOMAINES TECHNIQUES RECHERCHES (Int. Cl. ³) <br><br> G 05 B <br> G 05 D |

Le présent rapport de recherche a été établi pour toutes les revendications

| Lieu de la recherche <br> LA HAYE | Date d'achèvement de la recherche <br> 13-09-1984 | Examinateur <br> HOUILLON J.C.P.L. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

        & : membre de la même famille, document correspondant

OEB Form 1503. 03.82